(19) Europäisches Patentamt
European Patent Office
Office européen des brevets

(11) Numéro de publication : **0 016 707**
**B1**

(12) **FASCICULE DE BREVET EUROPÉEN**

(45) Date de publication du fascicule du brevet : **28.12.83**

(51) Int. Cl.³ : **C 08 F 210/16**, C 08 F 4/62, C 08 J 5/18

(21) Numéro de dépôt : **80400371.3**

(22) Date de dépôt : **20.03.80**

(54) **Copolymères de l'éthylène, films obtenus à partir desdits copolymères et procédé de production desdits copolymères.**

(30) Priorité : **23.03.79 FR 7907349**

(43) Date de publication de la demande : **01.10.80 Bulletin 80/20**

(45) Mention de la délivrance du brevet : **28.12.83 Bulletin 83/52**

(84) Etats contractants désignés : **AT BE CH DE GB IT LU NL SE**

(56) Documents cités :
**FR-A- 2 342 306**
**GB-A- 1 355 245**

(73) Titulaire : **Société Chimique des Charbonnages**
**Tour Aurore Place des Reflets Cedex no 5**
**F-92080 Paris La Défense 2 (FR)**

(72) Inventeur : **Machon, Jean-Pierre**
**366, rue Benoite Vincent**
**F-62400 Bethune (FR)**
Inventeur : **Raviola, Florent**
**Résidence Joffre Place Ferrer**
**F-62400 Bethune (FR)**
Inventeur : **Sauzeau, André**
**3 Bis rue de Condé**
**F-62160 Bully Les Mines (FR)**

(74) Mandataire : **Dubost, Thierry**
**Société Chimique des Charbonnages Service Propriété Industrielle B.P. No 1**
**F-62160 Bully Les Mines (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 016 707 B1

Jouve, 18, rue St-Denis, 75001 Paris, France

# Copolymères de l'éthylène, films obtenus à partir desdits copolymères et procédé de production desdits copolymères

L'invention se rapporte à des copolymères de l'éthylène capables d'être transformés en films et à un procédé de production desdits copolymères.

la littérature offre un grand nombre d'exemples de copolymères de l'éthylène et d'une α-oléfine. Ainsi les catalyseurs capables de polymériser l'éthylène sont généralement capables de copolymériser l'éthylène avec une α-oléfine. Toutefois les résultats d'une telle copolymérisation sont très dépendants du catalyseur employé et surtout, en ce qui concerne la qualité des produits, de la nature de l'α-oléfine. Les copolymères de cette catégorie qui ont été les plus étudiés dans la littérature sont sans nul doute les copolymères de l'éthylène et d'une α-oléfine ayant au moins 4 atomes de carbone. Ainsi le brevet français n° 2.303.030 décrit des copolymères éthylène/hexène-1 de masse volumique comprise entre 0,924 et 0,935 g/cm$^3$, d'indice de fluidité compris entre 0,1 et 0,7 et dont la teneur en méthyles (déterminée par analyse infrarouge) est comprise entre 17 et 25 $CH_3$ pour 1 000 atomes de carbone. Le brevet français n° 1.604.980 décrit d'une part des copolymères éthylène/butène-1 de masse volumique comprise entre 0,921 et 0,928 g/cm$^3$, d'indice de fluidité compris entre 0,75 et 1,52 et dont le nombre de groupes méthyles est compris entre 7,5 et 16,5 pour 1 000 atomes de carbone dans la molécule, d'autre part des copolymères éthylène/octène-1 de masse volumique comprise entre 0,914 et 0,929 g/cm$^3$, d'indice de fluidité compris entre 0,11 et 1,56 et dont le nombre de groupes méthyles est compris entre 5,5 et 21 pour 1 000 atomes de carbone dans la molécule.

Toutefois les copolymères de l'éthylène et d'une α-oléfine ayant au moins 4 atomes de carbone, bien que connus dans leur principe depuis plus de vingt ans, n'ont trouvé un débouché commercial que depuis peu de temps en raison de leur prix de revient défavorablement influencé par le prix de comonomères tels que butène-1, hexène-1 et octène-1.

Par ailleurs les copolymères éthylène/propylène, bien que plus favorisés que les précédents à cause du prix plus faible du comonomère propylène, n'ont pas fait l'objet d'études aussi développées. Cependant le brevet britannique n° 1.355.245 décrit des copolymères éthylène-propylène de masse volumique comprise entre 0,910 et 0,938 g/cm$^3$, d'indice de fluidité compris entre 1 et 2 et dont le nombre de groupes méthyles est compris entre 9 et 28 pour 1 000 atomes de carbone dans la molécule. Ces copolymères, dont la masse moléculaire est comprise entre 35.000 et 50.000, peuvent être transformés en articles moulés.

D'autre part le brevet français n° 1.604.980 cité plus haut apporte deux enseignements d'une grande valeur pour l'étude des propriétés physiques des copolymères de l'éthylène :

— d'une part l'importance d'une distribution étroite des masses moléculaires pour l'amélioration des propriétés, tout au moins pour les copolymères de l'éthylène et d'une α-oléfine ayant au moins 4 atomes de carbone.

— d'autre part la constatation que, à teneur égale en comonomère, l'homogénéité du copolymère abaisse la masse volumique.

De l'ensemble de ces documents on doit surtout retenir qu'un copolymère de l'éthylène et d'une α-oléfine destiné à un mode déterminé de transformation en objets finis n'est véritablement défini que par la donnée simultanée des six caractéristiques suivantes : 1) masse volumique, 2) nature du comonomère, 3) indice de fluidité, 4) nombre de groupes méthyles par macromolécule, 5) masse moléculaire moyenne, et 6) indice de polydispersité mesurant la distribution des masses moléculaires et défini ci-après. Lorsque, en présence de copolymères présentant des valeurs égales ou équivalentes pour cinq des six caractéristiques précédentes, on constate des valeurs nettement différentes quant à la sixième caractéristique, on doit s'attendre pour ces copolymères à des aptitudes nettement différenciées à un mode déterminé de transformation en objets finis et donc, en définitive, à des propriétés nettement différentes de ces objets finis.

Un premier objet de la présente invention consiste en des copolymères à base d'éthylène et de propylène capables d'être transformés en films possédant un ensemble de propriétés au moins équivalent, de préférence supérieur, techniquement aux polymères de l'éthylène capables d'être transformés en films. Par « ensemble de propriétés supérieur » il faut entendre que, dans l'ensemble des propriétés considérées, toutes les propriétés ne sont pas obligatoirement et simultanément améliorées, mais que certaines de ces propriétés sont améliorées de façon sensible au profit de l'utilisation de films, les autres propriétés étant soit simplement conservées soit diminuées sans que cette diminution annule les effets favorables des premières propriétés. Par « polymères de l'éthylène capables d'être transformés en films » il faut entendre non seulement ceux des copolymères de l'éthylène dont l'aptitude à être transformés en films est notée dans la littérature mais aussi et surtout les homopolymères de l'éthylène dits « polyéthylènes basse densité » produits par le procédé sous haute pression en présence d'initiateurs de radicaux libres.

Un second objet de la présente invention consiste en des films de propriétés améliorées fabriqués à partir desdits copolymères.

Enfin un troisième objet de la présente invention consiste en un procédé de production des copolymères définis dans le premier objet ci-dessus.

En accord avec le premier objet défini ci-dessus, l'invention concerne des copolymères éthylène/propylène de masse volumique comprise entre 0,905 et 0,935 g/$cm^3$, d'indice de fluidité compris entre 0,4 et 2 dg/min, ayant de 22 à 62 groupes méthyles pour 1 000 atomes de carbone dans la molécule, de masse moléculaire moyenne comprise entre 10 000 et 28 000 et d'indice de polydispersité compris entre 7 et 14. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/Mn de la masse moléculaire moyenne en poids à la masse moléculaire moyenne en nombre. Les copolymères selon l'invention comprennent pour l'essentiel des motifs éthylène à raison de 86,6 à 95,6 % en moles et des motifs propylène à raison de 4,4 à 12,4 % en moles, mais ils peuvent aussi comprendre une quantité mineure, allant jusqu'à 2 % en moles, de motifs provenant d'une autre α-oléfine telle que butène-1, méthyl-4-pentène-1, hexène-1, octène-1. Dans ce dernier cas il s'agit donc de terpolymères.

Les copolymères selon l'invention peuvent être définis de manière plus stricte par la relation qui existe entre leur masse volumique et leur taux de groupes méthyles, relation qui les différencie notamment des copolymères éthylène/propylène décrits par le brevet britannique n° 1.355.245. Cette relation, dans laquelle la masse volumique (exprimée en g/$cm^3$) est symbolisée par ρ et le taux de groupes méthyles par m, est la suivante

$$0{,}953\,0 \leq \rho + 0{,}83\,m \leq 0{,}956\,8$$

Cette relation est schématisée sur la figure unique en annexe représentant le diagramme de la masse volumique (en ordonnées) et du taux de groupes méthyles (en abscisse) de copolymères éthylène/propylène. Sur cette figure, la courbe A représente la relation entre masse volumique et nombre de groupes méthyles des copolymères décrits par le brevet britannique n° 1.355.245 aux exemples 3, 7 et 11. Le domaine hachuré B représente l'ensemble des copolymères selon l'invention.

Les copolymères selon l'invention ainsi définis sont doués de propriétés remarquables et sont capables d'être transformés en films possédant un ensemble de propriétés techniquement supérieur aux polymères de l'éthylène reconnus comme filmables. Les principales propriétés sur lesquelles porte l'amélioration sont l'allongement à la rupture dans le sens longitudinal, la résistance au déchirement et, en ce qui concerne la fabrication des films proprement dite, la force de tirage, la vitesse limite de tirage et l'étirabilité industrielle. Ces trois dernières propriétés sont d'une importance capitale pour l'industrie de transformation des matières plastiques puisqu'elles conditionnent tout à la fois la puissance de l'extrudeuse nécessaire à la fabrication du film, la cadence de fabrication, la consommation de matière nécessaire à la production d'un film de qualités déterminées et donc, en définitive, les conditions économiques d'utilisation de l'outil de production. Les copolymères selon l'invention sont ainsi caractérisés par un allongement à la rupture dans le sens longitudinal compris entre 800 % et 1 000 % environ pour un film de 50 micromètres d'épaisseur, par une force de tirage inférieure ou égale à 1,5 g pour une vitesse de tirage de 3,14 m/min par une vitesse limite de tirage supérieure ou égale à 80 m/min et par une étirabilité industrielle inférieure ou égale à 12 micromètres. Les conditions de mesure de ces différentes propriétés seront précisées dans les exemples ci-après. En ce qui concerne l'allongement à la rupture dans le sens longitudinal, il est toujours essentiel pour les comparaisons avec l'art antérieur de connaître l'épaisseur de l'échantillon de mesure car, ainsi qu'on le voit par le tableau 3 du brevet français n° 2.303.030, cette propriété croît en fonction de l'épaisseur dans la gamme d'épaisseurs comprises entre 30 et 150 μm, le coefficient linéaire de croissance étant compris entre environ 2,4 et 5,3 % μm selon la nature du polymère.

Conformément à son second objet, l'invention concerne également des films d;épaisseur inférieure ou égale à 12 micromètres obtenus à partir des copolymères éthylène/propylène définis précédemment. Ces films sont obtenus selon les techniques habituelles d'extrusion-soufflage et présentent des propriétés améliorées de résistance au déchirement et d'allongement à la rupture dans le sens longitudinal. Compte tenu que leurs autres propriétés physiques, notamment la résistance à la rupture, ne sont pas amoindries, ces films présentent l'avantage exceptionnel de procurer une même solidité et sécurité d'emploi que les films de polyéthylène basse densité classiques pour un poids beaucoup plus faible, l'étirabilité industrielle de ces derniers étant le plus souvent supérieure ou égale à 20 micromètres. Les films ainsi constitués ont de nombreux usages tels que, notamment, les sacs de grande contenance, les films agricoles, les films rigides pour l'emballage automatique. Les films selon l'invention sont dotés de propriétés optiques satisfaisantes comme par exemple une brillance généralement comprise entre 50 % et 80 %, une clarté généralement comprise entre 15 % et 50 %, un trouble généralement compris entre 15 % et 25 %, selon les conditions de mesure précisées dans les exemples ci-après. Ces propriétés permettent la réalisation de toute une gamme de films, comprenant notamment des films mats, sans transparence ni brillance.

Conformément à son dernier objet, l'invention concerne un procédé de production des copolymères définis ci-dessus, par copolymérisation de l'éthylène et du propylène dans au moins un réacteur comportant au moins une zone, à une température comprise entre 180° et 320 °C et sous une pression comprise entre 300 et 2 500 bars, au moyen d'un système catalytique de type Ziegler comprenant d'une part au moins un activateur choisi parmi les hydrures et les composés organométalliques des métaux des groupes I à III de la Classification Périodique et d'autre part au moins un composé halogéné de métal de

transition, caractérisé en ce que d'une part le flux gazeux alimentant le réacteur est constitué en régime stationnaire de 65 à 85 % en poids d'éthylène et de 15 à 35 % en poids de propylène et d'autre part le composé halogéné de métal de transition comprend un composé complexe de formule

$$(MCl_a)\ (MgX_2)_y\ (AlCl_3)_z\ (RMgX)_b$$

dans laquelle M est un métal choisi parmi le titane et le vanadium, X est un halogène, R est un radical hydrocarboné, $2 \leq a \leq 3$, $2 \leq y \leq 20$, $0 \leq z \leq 1/3$ et $0 \leq b \leq 1$. Un tel composé complexe peut être préparé par différentes méthodes : la réduction du tétrachlorure de titane ou vanadium par un composé organomagnésien RMgX conduit par exemple à un composé complexe dans lequel $0 \leq b \leq 1$ ; d'autres méthodes telles que, par exemple, la réduction du tétrachlorure de titane ou vanadium par l'aluminium en présence d'un halogénure de magnésium, le cobroyage de trichlorure de titane violet (de formule $TiCl_3 1/3 AlCl_3$) ou de trichlorure de vanadium avec un halogénure de magnésium anhydre, la réduction par un alkylaluminium de tétrachlorure de titane ou vanadium absorbé sur un halogénure de magnésium anhydre, conduisent à des composés complexes dans lesquels b = 0.

Le procédé selon l'invention n'exclut pas que le composé halogéné de métal de transition comprenne, outre le composé complexe de formule spécifiée plus haut, un ou plusieurs autres composés tels que notamment le trichlorure de vanadium ou de titane, ce dernier pouvant être syncristallisé avec le chlorure d'aluminium sous la forme $TiCl_3 1/3 AlCl_3$. Dans ce cas, il sera également avantageux d'utiliser ce ou ces composés dans un réacteur différent (ou dans une zone réactionnelle différente) du réacteur (ou de la zone réactionnelle) dans lequel (laquelle) on utilise ledit composé complexe.

Les proportions de l'activateur et du composé halogéné de métal de transition seront choisies de manière telle que le rapport atomique du métal de l'activateur au métal de transition soit compris entre 0,5 et 20. L'halogène X est de préférence choisi parmi le fluor, le chlore et le brome. Le radical R est de préférence choisi parmi les radicaux aliphatiques saturés (méthyle, éthyle, propyle, n-butyle, et insaturés (allyle) et les radicaux aromatiques (phényle). L'emploi du composé complexe de formule spécifiée plus haut est bien adapté dans toute la gamme de températures du procédé selon l'invention. L'homme de l'art prendra évidemment soin de choisir les autres constituants du système catalytique en fonction de leur stabilité thermique et de leur réactivité vis-à-vis de l'éthylène à la température choisie. De même le temps de séjour du système catalytique sera choisi par l'homme de l'art en fonction de la température de la zone réactionnelle dans laquelle on l'utilise et sera généralement compris entre 5 et 80 secondes environ ; ce temps sera d'autant plus court que la température d'utilisation du catalyseur sera plus élevée.

La composition du flux gazeux alimentant le réacteur en régime stationnaire, telle qu'elle caractérise le procédé selon l'invention, doit s'entendre comme une composition moyenne sur l'ensemble du réacteur, étant bien compris que cette composition n'est pas obligatoirement uniforme et peut varier le long du réacteur, particulièrement lorsque celui-ci comporte plusieurs zones. Il est même particulièrement avantageux que la teneur en propylène du flux alimentant une zone du réacteur soit d'autant plus élevée que la température maintenue dans cette zone est plus élevée : cette particularité du procédé a pour effet d'augmenter l'indice de polydispersité du copolymère et d'augmenter la proportion de très hautes masses moléculaires dans le copolymère, dont on peut se faire une idée en mesurant la masse moléculaire moyenne d'ordre supérieur Mz définie dans les exemples ci-après. On pourra même prévoir, dans le cas d'un réacteur comportant plusieurs zones, que le flux gazeux alimentant les autres zones auront des teneurs en propylène suffisamment élevées pour respecter la composition moyenne caractéristique du procédé selon l'invention. D'autre part l'homme de l'art choisira facilement cette composition moyenne parmi la gamme proposée en fonction de la masse volumique du copolymère qu'il désire atteindre : la teneur en propylène dans cette composition sera d'autant plus élevée que la masse volumique désirée sera plus faible.

Le procédé selon l'invention peut être mis en œuvre en copolymérisant l'éthylène et le propylène en présence d'un hydrocarbure tel que propane ou butane employé à raison de jusqu'à 50 % en poids. Afin de contrôler avec précision l'indice de fluidité du copolymère, il peut aussi être avantageux d'effectuer la copolymérisation en présence de jusqu'à 2 % en moles d'hydrogène. Enfin en vue d'appliquer le procédé selon l'invention à la production de terpolymères comme spécifié plus haut, il est aussi possible d'effectuer la copolymérisation en présence d'une quantité mineure, allant jusqu'à 10 % en poids, d'une autre α-oléfine telle que butène-1 ou hexène-1. Le procédé selon l'invention est mis en œuvre de manière continue en utilisant des réacteurs autoclaves ou bien tubulaires, comme cela est habituel dans la technique de polymérisation de l'éthylène sous haute pression.

Dans le cas où l'on désire produire des copolymères selon l'invention ayant un indice de polydispersité particulièrement élevé, par exemple supérieur à 10, il est avantageux d'utiliser un premier réacteur fonctionnant sous pression de 800 à 2 000 bars et à température de 180° à 260 °C et un second réacteur fonctionnant sous pression de 300 à 600 bars et à température de 240° à 320 °C, la copolymérisation se déroulant dans chacun des réacteurs en l'absence totale d'hydrogène et le flux de mélange gazeux (éthylène + propylène) alimentant le second réacteur représentant de 17 à 69 % du flux total d'alimentation en mélange gazeux.

L'invention sera mieux comprise à la lumière des exemples suivants qui ont pour objet de l'illustrer.

Exemples 1 à 3

On copolymérise l'éthylène et le propylène dans un réacteur autoclave de forme cylindrique fonctionnant sous une pression de 1 200 bars et muni intérieurement d'un agitateur et d'écrans métalliques qui délimitent trois zones de volume identique. La zone 1, maintenue à une température de 220 °C et alimentée par un flux de 40 kg/h d'éthylène et de P kg/h de propylène, reçoit un système catalytique comprenant d'une part du trichlorure de titane violet $TiCl_3 1/3AlCl_3$ et d'autre part du trioctyaluminium en quantité telle que le rapport atomique Al/Ti soit égal à 3. La zone 2, maintenue à une température $T_2$, est alimentée par un flux de 20 kg/h d'éthylène et ne reçoit aucun catalyseur. La zone 3, à la sortie de laquelle le mélange réactionnel contenant le copolymère est évacué vers un dispositif de séparation et de recyclage, est maintenue à la température de 260 °C et alimentée par un flux de 20 kg/h d'éthylène et reçoit un système catalytique comprenant d'une part un composé complexe de formule $TiCl_3$, $1/3AlCl_3$, $6MgCl_2$ obtenu par cobroyage de trichlorure de titane violet et de chlorure de magnésium anhydre et d'autre part du diméthyléthyldiéthylsiloxalane en quantité telle que le rapport atomique Al/Ti soit égal à 3. La teneur pondérale moyenne en propylène dans le réacteur est : $\pi = P/(P + 80)$. La copolymérisation est effectuée en l'absence d'hydrogène pour les exemples 1 et 3, en présence de 0,3 % en moles d'hydrogène pour l'exemple 2.

Le copolymère obtenu est caractérisé par les propriétés suivantes :

a) indice de fluidité (I.F.) mesuré selon la norme ASTM D 1238-73 et exprimé en dg/min.

b) masse volumique $\rho$ exprimée en $g/cm^3$.

c) masse moléculaire moyenne en nombre Mn mesurée par chromatographie de perméation de gel.

d) indice de polydispersité déterminé à partir de Mn et de la masse moléculaire moyenne en poids Mw mesurée selon la même méthode.

e) taux m de groupes méthyles de l'absorption du rayonnement infrarouge selon la norme ASTM D 2238-64T décrite dans le brevet français n° 1.604.980.

f) masse moléculaire moyenne d'ordre supérieur Mz définie, à partir de la distribution des masses moléculaires C(M) obtenue par chromatographie de perméation de gel, par la formule

$$Mz = \frac{\int_0^\infty M^2 \cdot C(M)\, dM}{\int_0^\infty M \cdot C(M)\, dM}$$

Les valeurs de ces propriétés sont rassemblées, avec les valeurs de P, $T_2$ et $\pi$, dans le tableau I ci-après. Les valeurs de Mn et Mz sont exprimées en milliers.

Tableau I

| Exemple | P | $\pi$ % | $T_2$ °C | I.F. | $\rho$ | $M_n$ | $M_w/M_n$ | m % | $M_z$ |
|---|---|---|---|---|---|---|---|---|---|
| 1 | 28 | 26 | 240 | 1,9 | 0,908 | 15,5 | 8,7 | 58 | 449 |
| 2 | 16,4 | 17,5 | 240 | 1,9 | 0,929 | 21 | 7,0 | 33 | 456 |
| 3 | 21,6 | 21,2 | 190 | 1,7 | 0,914 | 15,5 | 9,4 | 47 | 492 |

Exemple 4

On effectue la copolymérisation de l'éthylène et du propylène dans le même réacteur que précédemment. La zone 1 maintenue à 220 °C reçoit le même système catalytique que précédemment et est alimentée par un flux de 39 kg/h d'éthylène. La zone 2 maintenue à 235 °C ne reçoit aucun catalyseur. La zone 3 maintenue à 260 °C reçoit le même système catalytique qu'aux exemples précédents. Les zones 2 et 3 sont alimentées chacune par un flux de 21 kg/h d'éthylène et de 11,4 kg/h de propylène. La teneur pondérale moyenne en propylène dans le réacteur est donc de 21,8 %. La copolymérisation est effectuée en l'absence d'hydrogène. Le copolymère obtenu est caractérisé par les mêmes propriétés que dans les exemples précédents, dont les valeurs figurent dans le tableau II ci-après.

Exemples 5 et 6

On copolymérise l'éthylène et le propylène dans le même réacteur que précédemment fonctionnant sous une pression de 1 000 bars. Les zones 1, 2 et 3, maintenues respectivement à des températures de 180 °C, 220 °C et 255 °C, sont alimentées par des flux égaux de mélanges gazeux ayant même

composition, à savoir 25 % en poids de propylène pour l'exemple 5 et 26 % en poids de propylène pour l'exemple 6 et le complément d'éthylène dans chaque cas. Les trois zones reçoivent le même système catalytique constitué d'une part du composé complexe $TiCl_3$, 1/3 $AlCl_3$, 2$MgCl_2$ et d'autre part de diméthyléthyldiéthylsiloxalane en quantité telle que le rapport atomique Al/Ti soit égal à 2,5. La copolymérisation est effectuée en l'absence d'hydrogène. Les copolymères obtenus sont caractérisés par les mêmes propriétés que dans les exemples précédents, dont les valeurs figurent dans le tableau II ci-après

Exemples 7 et 8

On copolymérise l'éthylène et le propylène dans un système de réacteurs comprenant un premier réacteur autoclave de forme torique et de volume 0,91 l constituant une seule zone réactionnelle et un second réacteur autoclave cylindrique de volume 3 l divisé intérieurement, au moyen d'écrans métalliques, en trois zones de volume identique. Ces deux réacteurs sont disposés en parallèle entre le compresseur assurant leur alimentation d'une part et le séparateur dans lequel sont évacués leurs produits d'autre part.

Le premier réacteur fonctionne à une température de 290 °C sous une pression de 470 bars et reçoit un système catalytique comprenant d'une part un composé complexe de formule $TiCl_3$, 1/3$AlCl_3$, 6$MgCl_2$ obtenu par cobroyage du trichlorure de titane violet et de chlorure de magnésium anhydre et d'autre part du diméthyléthyldiéthylsiloxalane en quantité telle que le rapport atomique Al/Ti soit égal à 3. Les première et seconde zones du second réacteur, maintenues respectivement à des températures de 180° et 240 °C, reçoivent un système catalytique constitué de trichlorure de titane violet de trioctylaluminium en quantité telle que le rapport atomique Al/Ti soit égal à 3 ; la troisième zone maintenue à la température de 242 °C (exemple 7) ou 248 °C (exemple 8) reçoit le même système catalytique que le premier réacteur. Le second réacteur fonctionne sous la pression de 1 200 bars.

Le premier réacteur est alimenté par un flux de 30 kg/h de mélange éthylène-propylène, les zones 1, 2 et 3 du second réacteur respectivement par des flux de 40 kg/h, 20 kg/h et 20 kg/h de mélange éthylène-propylène. La proportion de propylène est identique dans toutes les zones d'alimentation et égale à 16 % (exemple 7) ou 15 % en poids (exemple 8). La copolymérisation est effectuée en l'absence d'hydrogène. Les copolymères obtenus sont caractérisés par les mêmes propriétés que dans les exemples précédents, dont les valeurs figurent dans le tableau II ci-après.

Tableau II

| Exemple | I.F. | ρ | Mn | Mw/Mn | m ‰ | Mz |
|---|---|---|---|---|---|---|
| 4 | 1,5 | 0,921 | 15 | 10,1 | 40 | 577 |
| 5 | 1,7 | 0,922 | 19,5 | 7,3 | 40 | 487 |
| 6 | 1,8 | 0,914 | 24 | 7,0 | 51 | 591 |
| 7 | 0,4 | 0,931 | | | 28 | |
| 8 | 0,8 | 0,934 | 11,5 | 13,9 | 23 | |

Exemple 9

On transforme par extrusion-soufflage les copolymères des exemples 1 à 6 en films d'épaisseur 50 microns. En vue de comparer leurs propriétés à celles d'un polyéthylène basse densité obtenu selon le procédé conventionnel de polymérisation en présence d'initiateurs de radicaux libres, on transforme en film de la même épaisseur un homopolymère d'éthylène commercialisé sous la référence PETEN B 1822 par la société PEKEMA (Finlande). Ce polymère de référence est caractérisé par les propriétés suivantes, mesurées selon les méthodes précédemment décrites (Mn exprimée en milliers) :

I.F. = 1,65 dg/min
m = 19 ‰
Mw/Mn = 5,9
$\rho = 0,922\ g/cm^3$
Mn = 20,5

Les propriétés des films que l'on mesure sont :

a) la résistance à la rupture RR (exprimée en $kg/cm^2$) et l'allongement à la rupture AR (exprimé en %) dans les sens longitudinal L et transversal T, déterminés selon la norme ASTM D 882-67.

b) la résistance au déchirement RD (exprimée en g/µm) dans les sens longitudinal L et transversal T, déterminée selon la norme ASTM D 1922-67.

c) les propriétés optiques de brillance B, de clarté C et de trouble T (exprimées en %), déterminées respectivement selon les normes E 2431, E 2412 et E 2421.

d) la vitesse de tirage limite VTL (exprimée en m/min) et la force de tirage FT à une vitesse de tirage de 3,14 m/min (exprimée en gf) déterminées à 190 °C au moyen d'un extensiomètre TOYOSEIKI.

e) l'étirabilité industrielle EI (exprimée en microns), définie comme l'épaisseur de film permettant une fabrication continue par extrusion-soufflage pendant une durée de 2 heures sans perturbations.

Compte tenu du très grand nombre de mesures à effectuer, seulement certaines propriétés ont été déterminées pour chaque produit. Les résultats de ces mesures figurent dans le tableau III.

Pour le produit obtenu à l'exemple 4, on a trouvé les résultats suivants :

vitesse de tirage limite : 100 m/min
force de tirage : 1,1 g
étirabilité industrielle : 7 µm

Pour le produit obtenu à l'exemple 8, on a trouvé une vitesse de tirage limite de 125 m/min.

Tableau III

| Produit | | 1 | 2 | 3 | 5 | 6 | PETEN |
|---|---|---|---|---|---|---|---|
| RR | L | 140 | 185 | | 195 | 174 | 190 |
| | T | 100 | 150 | | 149 | 166 | 170 |
| AR | L | 910 | 900 | | 900 | 980 | 520 |
| | T | 1060 | 850 | | 875 | 1210 | 710 |
| RD | L | 6,4 | | 5,6 | | 5,2 | 6,8 |
| | T | 14,1 | | 15,4 | | 10,2 | 6,0 |
| B | | 57 | 53 | 61 | 80 | 52 | 93 |
| C | | | | 22 | 48 | 15 | 39 |
| T | | 17 | 23 | 19 | 16 | 24 | 8 |
| VTL | | 85 | 80 | | 80 | 160 | 35 |
| FT | | 0,65 | 1,1 | | 1,7 | 1,4 | 4,6 |
| EI | | 9 | 7 | 9 | | | 22 |

**Revendications**

1. Procédé de copolymérisation de l'éthylène et du propylène dans au moins un réacteur comportant au moins une zone, à une température comprise entre 180° et 320 °C et sous une pression comprise entre

300 et 2 500 bars, au moyen d'un système catalytique de type Ziegler, comprenant d'une part au moins un activateur choisi parmi les hydrures et les composés organo-métalliques des métaux des groupes I à III de la Classification Périodique et d'autre part au moins un composé halogéné de métal de transition en proportion telle que le rapport atomique du métal de l'activateur au métal de transition soit compris entre 0,5 et 20, caractérisé en ce que d'une part le flux gazeux alimentant le réacteur est constitué en régime stationnaire de 65 à 85 % en poids d'éthylène et de 15 à 35 % en poids de propylène et d'autre part le composé halogéné de métal de transition comprend un composé complexe de formule

$$(MCl_a)\,(MgX_2)_y\,(AlCl_3)_z\,(RMgX)_b$$

dans laquelle M est un métal choisi parmi le titane et le vanadium, X est un halogène, R est un radical hydrocarboné, $2 \leq a \leq 3$, $2 \leq y \leq 20$, $0 \leq z \leq 1/3$ et $0 \leq b \leq 1$.

2. Procédé selon la revendication 1, caractérisé en ce que la copolymérisation est effectuée dans un réacteur comportant au moins deux zones et en ce que la teneur en propylène du flux alimentant une zone est d'autant plus élevée que la température maintenue dans ladite zone est plus élevée.

3. Procédé selon l'une des revendications 1 et 2, caractérisé en ce que la copolymérisation est effectuée en présence d'une α-oléfine supplémentaire en quantité telle que sa proportion dans le flux gazeux alimentant le réacteur en régime stationnaire soit inférieure ou égale à 10 % en poids.

4. Procédé selon l'une des revendications 1 à 3, caractérisé en ce que la polymérisation est effectuée dans un réacteur comportant au moins deux zones et au moyen d'un système catalytique comprenant, outre ledit composé complexe, un second composé halogéné de métal de transition, et en ce que ledit composé complexe est utilisé dans une zone dudit réacteur tandis que ledit second composé halogéné est utilisé dans une autre zone dudit réacteur.

5. Procédé selon l'une des revendications 1 à 4, caractérisé en ce que la copolymérisation est effectuée dans un système de deux réacteurs, le premier réacteur fonctionnant sous une pression de 800 à 2 000 bars et à une température de 180° à 260 °C et le second réacteur fonctionnant sous pression de 300 à 600 bars et à une température de 240 °C à 320 °C, la copolymérisation se déroulant dans chacun des réacteurs en l'absence totale d'hydrogène et le flux de mélange gazeux alimentant le second réacteur représentant de 17 à 69 % du flux total d'alimentation en mélange gazeux.

6. Copolymères éthylène/propylène comprenant de 87,6 à 95,6 % en moles d'éthylène et de 4,4 à 12,4 % en moles de propylène, de masse volumique comprise entre 0,905 et 0,935 $g/cm^3$ et d'indice de fluidité compris entre 0,4 et 2 dg/min, caractérisés en ce qu'ils possèdent de 22 à 62 groupes méthyles pour 1 000 atomes de carbone dans la molécule, en ce que leur masse volumique ρ exprimée en $g/cm^3$ et leur taux de groupes méthyles par atomes de carbone dans la molécule satisfont la relation

$$0{,}953\,0 \leq \rho + 0{,}83\,m \leq 0{,}956\,8$$

et en ce qu'ils sont susceptibles d'être obtenus par le procédé selon l'une des revendications 1 à 5.

7. Copolymères selon la revendication 6, caractérisés en ce que leur masse moléculaire moyenne est comprise entre 10 000 et 28 000.

8. Copolymères selon l'une des revendications 6 et 7, caractérisés en ce que leur indice de polydispersité est compris entre 7 et 14.

9. Films obtenus à partir de copolymères selon l'une des revendications 6 à 8.

10. Films selon la revendication 9, caractérisés en ce que leur épaisseur est inférieure ou égale à 12 micromètres.

## Claims

1. Process for the copolymerization of ethylene and propylene in at least one reactor comprising at least one zone, at a temperature between 180 °C and 320 °C and at a pressure between 300 and 2, 500 bars, by means of a Ziegler-type catalytic system comprising on the one hand at least one activator selected from the hydrides and the organo-metallic compounds of the metals of the groups I through III of the Periodic Table and on the other hand at least one transition-metal halogenated compound in such a proportion that the atomic ratio of the metal of the activator to the transition metal be comprised between 0,5 and 20, characterized in that on the one hand the gaseous flow feeding the reactor consists in the steady conditions of 65 to 85 % by weight of ethylene and of 15 to 35 % by weight of propylene and on the other hand the transition-metal halogenated compound comprises a complex compound of formula

$$(MCl_a)\,(MgX_2)_y\,(AlCl_3)_z\,(RMgX)_b$$

where M is a metal selected from titanium and vanadium, X is a halogen, R is a hydrocarbon radical, $2 \leq a \leq 3$, $2 \leq y \leq 20$, $0 \leq z \leq 1/3$, and $0 \leq b \leq 1$.

2. Process according to claim 1, characterised in that the copolymerization is carried out in a reactor comprising at least two zones and in that the content in propylene in the flow feeding one zone is the

higher as the temperature kept in said zone is the higher.

3. Process according to one of claims 1 and 2, characterised in that the copolymerization is carried out in the presence of an additional alpha-olefin in such an amount that its proportion in the gaseous flow feeding the reactor in the steady conditions is equal to or less than 10 % by weight.

4. Process according to one of claims 1 through 3, characterised in that the copolymerization is carried out in a reactor comprising at least two zones and by means of a catalytic system comprising in addition to said complex compound, a second transition-metal halogenated compound, and in that said complex compound is used in a zone of said reactor whereas said second halogenated compound is used in another zone of said reactor.

5. Process according to one of claims 1 through 4, characterised in that the copolymerization is carried out in a system of two reactors, the first reactor operating at a pressure of 800 to 2,000 bars and at a temperature between 180 °C and 260 °C and the second reactor operating at a pressure of 300 to 600 bars and at a temperature between 240 °C and 320 °C, the copolymerization taking place in both reactors in the total absence of hydrogen and the flow of gaseous mixture feeding the second reactor representing 17 to 69 % of the total supply of gaseous mixture.

6. Ethylene/propylene copolymers comprising from 87,6 to 95,6 % by moles of ethylene and from 4,4 to 12,4 % by moles of propylene, having a density between 0,905 and 0.935 g/cm$^3$ and a melt index between 0,4 and 2 dg/min, characterised in that they contain from 22 to 62 methyl groups per 1,000 carbon atoms in the molecule and in that their density ρ expressed in g/cm$^3$ and their proportion of methyl groups are related by

$$0.953\,0 \leqslant \rho + 0.83\, m \leqslant 0.956\,8,$$

and in that they are capable of being obtained by means of the process according to one of claims 1 to 5.

7. Copolymers according to claim 6, characterised in that their average molecular weight is between 10,000 and 28,000.

8. Copolymers according to one of claims 6 and 7, characterised in that their polydispersity index is between 7 and 14.

9. Films obtained from the copolymers according to one of claims 6 through 8.

10. Films according to claim 9, characterised in that their thickness is equal to or less than 12 micrometers.

**Ansprüche**

1. Verfahren zur Copolymerisation von Äthylen und Propylen in mindestens einem wenigstens eine Zone aufweisenden Reaktor bei einer Temperatur zwischen 180° und 320 °C und unter einem Druck zwischen 300 und 2 500 bar mittels eines Katalysatorsystems des Typus Ziegler, der einerseits mindestens einen Aktivator ausgewählt aus den Hydriden und den organometallischen Verbindungen der Metalle der Gruppen I bis III des Periodensystems und anderseits mindestens eine Halogenverbindung eines Übergangsmetalls in solchen Anteilen enthält, daß das Atomverhältnis des Metalls des Aktivators zum Übergangsmetall zwischen 0,5 und 20 liegt, dadurch gekennzeichnet, daß einerseits der den Reaktor speisende Gasstrom stationär von 65 bis 85 Gew.-% Äthylen und 15 bis 35 Gew.-% Polypropylen gebildet wird und anderseits die Halogenverbindung des Übergangsmetalls eine Komplexverbindung der Formel

$$(MCl_a)\,(MgX_2)_y\,(AlCl_3)_z\,(RMgX)_b$$

ist, worin M Titan oder Vanadium, X ein Halogen, R ein Kohlenwasserstoffradikal, $2 \leqslant a \leqslant 3$, $2 \leqslant y \leqslant 20$, $0 \leqslant z \leqslant 1/3$ und $0 \leqslant b \leqslant 1$ ist.

2. Verfahren nach Anspruch 1, dadurch gekennzeichnet, daß die Copolymerisation in einem mindestens zwei Zonen aufweisenden Reaktor durchgeführt wird und der Gehalt des eine Zone speisenden Gasstromes an Propylen desto größer ist je höher die in der genannten Zone aufrechterhaltene Temperatur ist.

3. Verfahren nach Anspruch 1 oder 2, dadurch gekennzeichnet, daß die Copolymerisation in Gegenwart eines zusätzlichen α-Olefins in einer solchen Menge durchgeführt wird, daß sein Anteil in dem den Reaktor stationär speisenden Gasstrom weniger als oder gleich 10 Gew.-% beträgt.

4. Verfahren nach einem der Ansprüche 1 bis 3, dadurch gekennzeichnet, daß die Polymerisation in einem wenigstens zwei Zonen aufweisenden Reaktor und mittels eines Katalysatorsystems durchgeführt wird, das außer der Komplexverbindung eine zweite Halogenverbindung eines Übergangsmetalls enthält, und daß die genannte Komplexverbindung in einer Zone des genannten Reaktors verwendet wird, während die genannte zweite Halogenverbindung in einer anderen Zone des genannten Reaktors verwendet wird.

5. Verfahren nach einem der Ansprüche 1 bis 4, dadurch gekennzeichnet, daß die Copolymerisation in einem System aus zwei Reaktoren durchgeführt wird, wobei der erste Reaktor unter einem Druck von 800 bis 2 000 bar und bei einer Temperatur von 180° bis 260 °C und der zweite Reaktor unter einem Druck

von 300 bis 600 bar und bei einer Temperatur von 240° bis 320 °C arbeitet, und wobei die Copolymerisation in jedem Reaktor unter vollständigem Ausschluß von Wasserstoff abläuft und der den zweiten Reaktor speisende Gasgemischstrom 17 bis 69 % des Gesamtspeisestromes an Gasgemisch ausmacht.

6. Äthylen/Propylen-Copolymere mit 87,6 bis 95,6 Mol.-% Äthylen und 4,4 bis 12,4 Mol.-% Propylen, einer Dichte zwischen 0,905 und 0,935 $g/cm^3$ und einem Fließindex zwischen 0,4 und 2 dg/min. dadurch gekennzeichnet, daß sie 22 bis 62 Methylgruppen pro 1 000 Kohlenstoffatome im Molekül besitzen und ihre Dichte $\rho$ in $g/cm^3$ und ihr Methylgruppenanteil in bezug auf die Kohlenstoffatome im Molekül die Beziehung

$$0{,}953\,0 \leqslant \rho + 0{,}83\,m \leqslant 0{,}956\,8$$

erfüllen und daß sie nach dem Verfahren nach einem der Ansprüche 1 bis 5 herstellbar sind.

7. Copolymere nach Anspruch 6, dadurch gekennzeichnet, daß ihre mittlere Molekularmasse zwischen 10 000 und 28 000 beträgt.

8. Copolymere nach Anspruch 6 oder 7, dadurch gekennzeichnet, daß ihre Polydispersitätszahl zwischen 7 und 14 liegt.

9. Aus Copolymeren nach einem der Ansprüche 6 bis 8 hergestellte Filme.

10. Filme nach Anspruch 9, dadurch gekennzeichnet, daß ihre Dicke geringer als oder gleich 12 Mikrometer ist.

Fig. 1

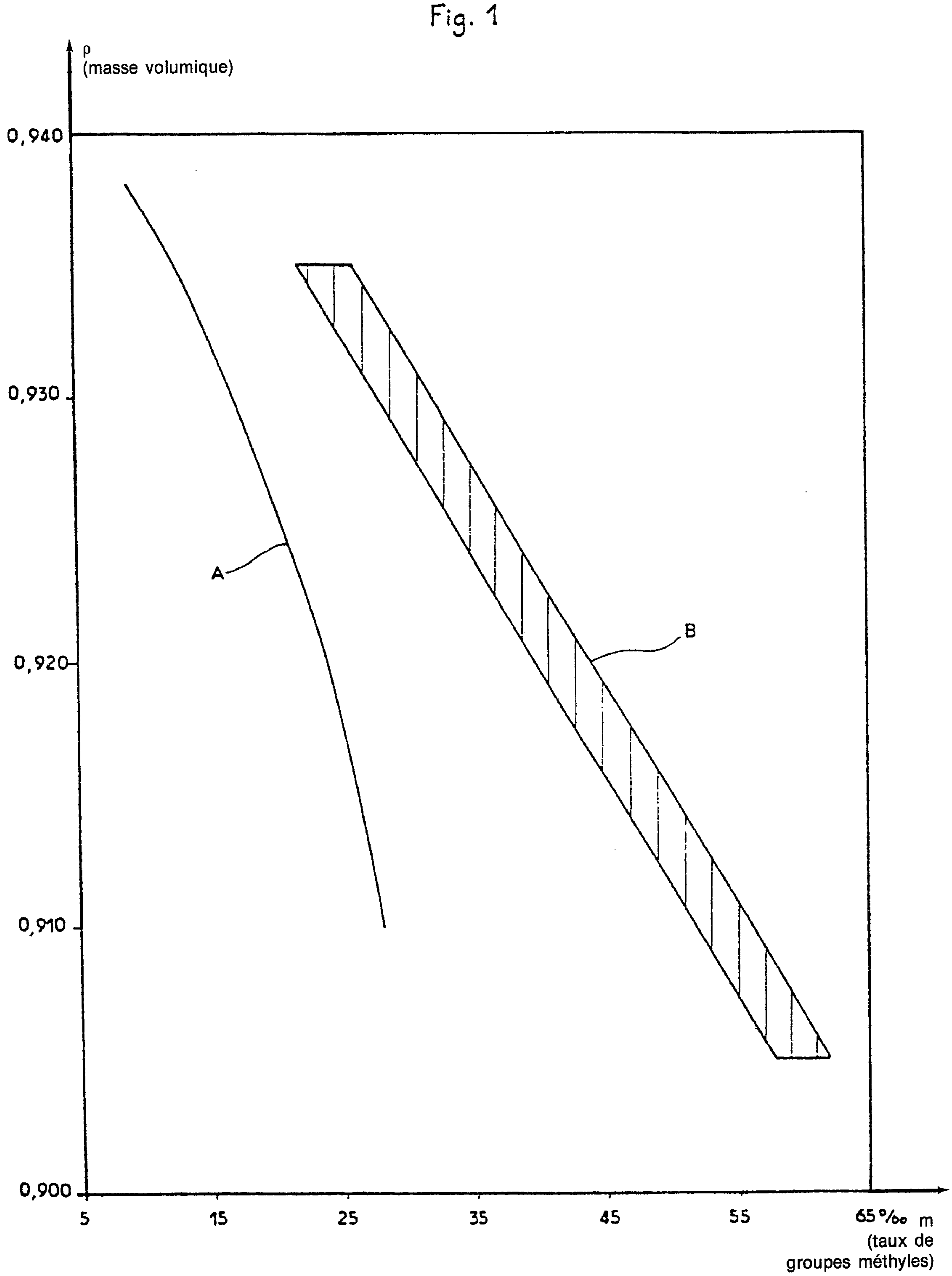
ρ
(masse volumique)
0,940
0,930
0,920
0,910
0,900
A
B
5
15
25
35
45
55
65 ‰ m
(taux de
groupes méthyles)